(19) Europäisches Patentamt
European Patent Office
Office européen des brevets

(11) Veröffentlichungsnummer : **0 151 800**
**B1**

(12) # EUROPÄISCHE PATENTSCHRIFT

(45) Veröffentlichungstag der Patentschrift : **21.10.87**

(21) Anmeldenummer : **84116308.2**

(22) Anmeldetag : **27.12.84**

(51) Int. Cl.⁴ : **C 08 G 18/48**, C 08 G 18/80, C 08 G 18/10, C 07 C125/06

(54) **Verwendung von urethanmodifizierten Polyisocyanat-Zubereitungen als Isocyanatkomponente bei der Herstellung von Formkunststoffen nach der RIM-Technik.**

(30) Priorität : **14.01.84 DE 3401166**

(43) Veröffentlichungstag der Anmeldung : **21.08.85 Patentblatt 85/34**

(45) Bekanntmachung des Hinweises auf die Patenterteilung : **21.10.87 Patentblatt 87/43**

(84) Benannte Vertragsstaaten : **DE FR GB IT SE**

(56) Entgegenhaltungen :
**EP-A- 0 004 879**
**EP-A- 0 093 357**
**EP-A- 0 145 269**
**GB-A- 1 285 052**
**US-A- 3 457 225**

(73) Patentinhaber : **BAYER AG**
**Konzernverwaltung RP Patentabteilung**
**D-5090 Leverkusen 1 Bayerwerk (DE)**

(72) Erfinder : **Rasshofer, Werner, Dr.**
**Wolfskaul 10**
**D-5000 Köln 80 (DE)**
Erfinder : **Kopp, Richard, Dr.**
**Wolfskaul 12**
**D-5000 Köln 80 (DE)**
Erfinder : **Paul, Reiner, Dr.**
**Oberhausener Strasse 155**
**D-4330 Mülheim/Ruhr (DE)**
Erfinder : **Seel, Klaus, Dr.**
**Märchenstrasse 72**
**D-5000 Köln 80 (DE)**
Erfinder : **Ganster, Otto, Dr.**
**Berliner-Strasse 64a**
**D-5090 Leverkusen (DE)**

**EP 0 151 800 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von ausgewählten urethanmodifizierten Polyisocyanat-Zubereitungen als Isocyanatkomponente bei der Herstellung von Formkunststoffen auf Polyurethanbasis nach der Methode der Reaktionsspritzgußtechnik.

Die Herstellung von urethanmodifizierten Polyisocyanat-Zubereitungen, d. h. von endständige Isocyanatgruppen aufweisenden Prepolymeren bzw. Semiprepolymeren, insbesondere auf Basis von Polyisocyanaten bzw. Polyisocyanatgemischen der Diphenylmethanreihe (4,4'-Diisocyanatodiphenylmethan, dessen Gemische mit 2,4'- und gegebenenfalls 2,2'-Diisocyanatodiphenylmethan oder Phosgenierungsprodukte von Anilin/Formaldehyd-Kondensaten, die neben diesen Diisocyanaten deren höhere Homologen enthalten) und den unterschiedlichsten Polyhydroxylverbindungen ist bereits bekannt (vgl. z. B. EP-A-10 850 oder 66 130 ; DE-A 2 347 207, 2 404 166, 2 513 793, 2 513 796, 2 620 222, 2 622 104, 2 732 182, 2 737 338, 2 804 375, 2 810 596, 2 815 579 oder 2 913 126 ; US-A 3 644 457, 4 055 548, 4 234 714 oder 4 321 333, sowie GB-A 1 369 334).

Im allgemeinen geht es bei den Verfahren dieser Vorveröffentlichungen um die Verflüssigung von bei Raumtemperatur festem Diisocyanatodiphenylmethan, insbesondere 4,4'-Diisocyanatodiphenylmethan oder um die Verminderung der Kristallisationsneigung von bei Raumtemperatur flüssigen Polyisocyanatgemischen der Diphenylmethanreihe während der Lagerung bei tiefen Temperaturen.

Jetzt wurde überraschend gefunden, daß urethanmodifizierte Polyisocyanat-Zubereitungen auf Basis von a) Polyisocyanaten bzw. Polyisocyanatgemischen der Diphenylmethanreihe und b) Alkoxylierungsprodukten von Bisphenolen der nachstehend genannten Art nicht nur Kompositionen mit einem erniedrigten Schmelzpunkt bzw. einer verminderten Kristallisationsneigung bei der Lagerung bei tiefen Temperaturen darstellen, sondern darüber hinaus die Herstellung von Polyurethankunststoffen, insbesondere von Polyurethan-Formkörpern mit einer homogenen Oberfläche gestatten, die sich durch wesentlich verbesserte mechanische Eigenschaften, insbesondere einen besseren Wärmestand, eine höhere Steifigkeit und bessere « green strength » bei gleichzeitig hoher Flexibilität und eine hohe Bruchdehnung auszeichnen.

Die GB-A-1 285 052 beschreibt zwar bereits die Herstellung von Kunststoffen durch Polymerisation von NCO-Gruppen aufweisenden Vorpolymeren in Gegenwart eines Trimerisierungskatalysators, wobei als Vorpolymere Umsetzungsprodukte aus reinem oder rohem MDI mit Anlagerungsprodukten von 2-4 Mol Propylenoxid an 1 Mol Bisphenol A zum Einsatz gelangen. Bei den Vorpolymeren handelt es sich jedoch keineswegs um Semipolymere, die unter Verwendung eines hohen NCO-Überschusses hergestellt worden sind. Im übrigen kann die mit der Herstellung von Isocyanurat -Polymeren befaßte GB-A-1 285 052 selbstverständlich keinerlei Hinweis auf die erfindungsgemäß aufgefundenen Zusammenhänge vermitteln, denenzufolge Semiprepolymere, d. h. Polyisocyanat-Zubereitungen der nachstehend näher beschriebenen erfindungsgemäßen Art nicht nur vergleichsweise niedrigviskose Flüssigkeiten darstellen (bei den Prepolymeren der Vorveröffentlichung handelt es sich um Feststoffe bzw. sirupöse Flüssigkeiten), sondern vor allem die Herstellung von besonders hochwertigen Formkunststoffen nach der « RIM-Technologie » gestatten.

Die US-A-3 457 225 beschreibt ebenfalls die Herstellung von Polyisocyanat-Zubereitungen auf Basis von alkoxyliertem Bisphenol A. Als Polyisocyanatkomponente wird hierbei vorzugsweise Toluylendiisocyanat verwendet, während die Herstellung von Semiprepolymeren, d. h. die Verwendung eines hohen Polyisocyanat-Überschusses überhaupt nicht angesprochen wird. Außerdem befaßt sich diese Vorveröffentlichung mit einem dreistufigen Verfahren zur Herstellung von Polyurethanen, welches mit der Herstellung von Polyurethankunststoffen nach der « RIM-Technologie » in keinerlei Zusammenhang gebracht werden kann. Die Vorveröffentlichung kann demzufolge auch keinerlei Hinweise auf die obengenannten erfindungsgemäß aufgefundenen Zusammenhänge vermitteln.

Gegenstand der Erfindung ist die Verwendung von urethanmodifizierten Polyisocyanat-Zubereitungen mit einem NCO-Gehalt von 5-30 Gew.-%, hergestellt durch Umsetzung von

a) organischen Polyisocyanaten, bestehend aus

a1) 4,4'-Diisocyanatodiphenylmethan oder dessen Gemischen mit 2,4'-Diisocyanatodiphenylmethan und gegebenenfalls 2,2'-Diisocyanatodiphenylmethan,

a2) rohen Phosgenierungsprodukten von Anilin/Formaldehyd-Kondensaten, die neben den unter a1) genannten Diisocyanaten deren höhere Homologen enthalten, oder

a3) Gemischen der unter a1) und a2) genannten Polyisocyanate

mit

b) 2 alkoholische Hydroxylgruppen aufweisenden Alkoxylierungsprodukten des OH-Zahlbereichs 112 bis 389 von Bisphenolen der Formel

(Siehe Formel Seite 3 f.)

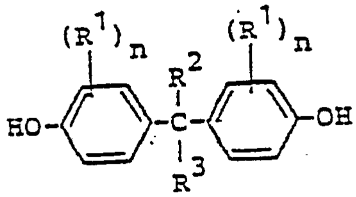

gegebenenfalls in Abmischung mit bis zu 90, vorzugsweise 50 Hydroxyläquivalentprozent an anderen organischen Polyhydroxylverbindungen, wobei

$R^1$ für einen Alkylrest mit 1 bis 4 Kohlenstoffatomen, Chlor oder Brom steht,

$R^2$ und $R^3$ für gleiche oder verschiedene Reste stehen und Wasserstoff oder Alkylreste mit 1 bis 6 Kohlenstoffatomen bedeuten oder zusammen mit dem die beiden aromatischen Ringe verknüpfenden Kohlenstoffatom einen 5 bis 7-gliedrigen cycloaliphatischen Kohlenwasserstoffrest bilden, und

n für 0 oder eine ganze Zahl von 1 bis 4 steht,

unter Einhaltung eines NCO/OH-Äquivalentverhältnisses von 4 : 1 bis 20 : 1 als Isocyanatkomponente bei der Herstellung von Formkunststoffen auf Polyurethanbasis nach der Reaktionsspritzgußtechnik.

Die ältere, jedoch nicht vorveröffentlichte EP-A-0 145 269 erwähnt zwar auf Seite 9 bereits eine Polyisocyanat-Zubereitung der erfindungsgemäß zu verwendenden Art, jedoch enthält diese Veröffentlichung keinerlei Hinweis auf die erfindungsgemäße Verwendung.

Bei den Polyisocyanaten a) handelt es sich, wie dargelegt, um Polyisocyanate bzw. Polyisocyanatgemische der Diphenylmethanreihe. Beliebige Gemische derartiger Polyisocyanate können verwendet werden. Bei den besonders bevorzugt einzusetzenden Polyisocyanat-Gemischen der Diphenylmethanreihe handelt es sich um 4,4'-Diisocyanatodiphenylmethan, dessen Gemische mit 2,4'- und gegebenenfalls 2,2'-Diisocyanatodiphenylmethan mit einem Gehalt, bezogen auf Gesamtgemisch, an 2,4'-Diisocyanatodiphenylmethan von bis zu 70 Gew.-%, vorzugsweise bis zu 20 Gew.-%, wobei der Gehalt an 2,2'-Diisocyanatodiphenylmethan im allgemeinen 5 Gew.-% nicht übersteigt, und um Polyisocyanate, wie sie durch Phosgenierung von Anilin/Formaldehyd-Kondensaten erhalten werden, und die neben Diisocyanatodiphenylmethan-Isomeren der genannten Art unterschiedliche Mengen an höheren homologen Polyisocyanaten (im allgemeinen 5 bis 60 Gew.-%, bezogen auf Gesamtgemisch) enthalten können.

Reaktionspartner für die Polyisocyanate sind zwei alkoholische Hydroxylgruppen aufweisende Alkoxylierungsprodukte des OH-Zahlbereichs 112 bis 389, vorzugsweise 200 bis 354 von Bisphenolen der bereits obengenannten allgemeinen Formel. Vorzugsweise werden Alkoxylierungsprodukte von Bisphenolen der genannten allgemeinen Formel eingesetzt, in welcher

n für 0 und

$R^2$ und $R^3$ jeweils für Methylreste stehen.

Ausgangsmaterialien für die Herstellung der genannten Alkoxylierungsprodukte sind somit beispielsweise 4,4'-Dihydroxy-diphenylmethan, Bisphenol A (4,4'-Dihydroxy-diphenylpropan-(2,2)), 3,3'-Dimethyl-4,4'-dihydroxy-diphenylpropan-(2,2), 3,3'-Di-n-hexyl-4,4'-dihydroxy-diphenylpropan-(2,2), 2,3,5,6,2',3',5',6'-Octachlor- (bzw. Octabrom)-4,4'-dihydroxy-diphenylpropan-(2,2), 4,4'-Dihydroxy-diphenylhexan-(2,2), 4,4'-Dihydroxy-diphenyloctan-(2,2) oder 4,4'-Dihydroxydiphenylcyclohexan-(1,1). Besonders bevorzugt werden die entsprechenden Alkoxylierungsprodukte von Bisphenol A eingesetzt.

Die als Reaktionspartner für die Ausgangspolyisocyanate einzusetzenden Polyhydroxylverbindungen stellen alkoholische Hydroxylgruppen aufweisende Alkoxierungsprodukte derartiger Startermoleküle dar. Die Menge der hierbei zum Einsatz gelangenden Alkylenoxide muß zumindest so bemessen sein, daß im statistischen Mittel mindestens 90 % der, vorzugsweise alle phenolischen Hydroxylgruppen in Ethergruppen überführt werden, so daß es sich bei den Hydroxylgruppen der Alkoxylierungsprodukte zumindest zu 90 Äquivalentprozent, vorzugsweise ausschließlich um alkoholische Hydroxylgruppen handelt. Die Alkoxylierungsreaktion kann im übrigen, den oben gemachten Ausführungen bezüglich der Hydroxylzahl der Alkoxylierungsprodukte entsprechend, durchaus so geführt werden, daß endständige Hydroxylgruppen aufweisende Polyetherdiole entstehen, welche mehr als 2 eingebaute Alkylenoxid-Einheiten pro Molekül aufweisen. Für die Herstellung der Alkoxylierungsprodukte werden hierbei als Alkylenoxide insbesondere Ethylenoxid und/oder Propylenoxid in beliebiger Reihenfolge oder Gemische dieser Alkylenoxide eingesetzt. Besonders gut geeignet sind die Ethoxylierungsprodukte und Propoxylierungsprodukte des obengenannten Hydroxylzahlbereichs von Bisphenol A.

Bei der Herstellung der Polyisocyanat-Zubereitungen können neben den genannten Alkoxylierungsprodukten von Bisphenolen auch andere Polyhydroxylverbindungen in einer Menge von bis zu 90, vorzugsweise bis zu 50 Hydroxyläquivalentprozent, bezogen auf alle Polyhydroxylverbindungen mitverwendet werden. Dies bedeutet insbesondere, daß die Alkoxylierungsprodukte der Bisphenole in Abmischung mit anderen Polyhydroxylverbindungen insbesondere solchen, wie sie gemäß den obengenannten Vorveröffentlichungen zur Modifizierung von Polyisocyanaten der Diphenylmethanreihe bereits eingesetzt worden sind, verwendet werden. Geeignete Polyhydroxylverbindungen, die gegebenenfalls in Kombination mit den erfindungswesentlichen Polyhydroxylverbindungen bei der Durchführung des erfindungsgemäßen Verfahrens eingesetzt werden können sind somit beispielsweise einfache, bevorzugt

Ethergruppen aufweisende Glykole des (mittleren) Molekulargewichts 62 bis 700 wie z. B. Ethylenglykol, 1,2-Dihydroxypropan, 1,4-Dihydroxybutan, Polyethylenglykole und insbesondere Polypropylenglykole des genannten Molekulargewichtsbereichs oder auch lineare oder verzweigte Polyetherpolyole eines zwischen 700 und 10 000, vorzugsweise 2 000 und 6 000 liegenden Molekulargewichts wie z. B. die entsprechenden Alkoxylierungsprodukte geeigneter niedermolekularer Startermoleküle wie z. B. den soeben genannten einfachen Glykolen oder von geeigneten höherfunktionellen Startermolekülen wie z. B. Glycerin oder Trimethylolpropan. Beliebige Gemische der genannten nieder- oder höhermolekularen Polyhydroxylverbindungen können selbstverständlich bei der Durchführung des erfindungsgemäßen Verfahrens ebenfalls zusammen mit den erfindungswesentlichen Polyhydroxylverbindungen eingesetzt werden. Es ist grundsätzlich auch möglich, die Ausgangspolyisocyanate nacheinander mit den erfindungswesentlichen Alkoxylierungsprodukten von Bisphenolen und anschließend mit den genannten anderen Polyhydroxylverbindungen oder auch in umgekehrter Reihenfolge mit diesen Polyhydroxylverbindungen zur Reaktion bringen. Vorzugsweise wird jedoch unter ausschließlicher Verwendung von alkoxylierten Bisphenolen der genannten Art gearbeitet.

Zur Herstellung der Polyisocyanat-Zubereitungen kommen die Reaktionspartner im übrigen in solchen Mengen zum Einsatz, die einem Äquivalentverhältnis von Isocyanatgruppen zu Hydroxylgruppen der alkoxylierten Bisphenole und gegebenenfalls zusätzlich verwendeten Polyhydroxylverbindungen von 4 : 1 bis 20 : 1 entsprechen.

Die Herstellung der Polyisocyanat-Zubereitungen wird im allgemeinen innerhalb des Temperaturbereichs von 20-140 °C, vorzugsweise 40-120 °C durchgeführt. Die Umsetzung erfolgt im allgemeinen durch Zusammengeben der Reaktionspartner bei Raumtemperatur und anschließendes Aufheizen auf maximal 140 °C, vorzugsweise 40-100 °C, bis der berechnete NCO-Gehalt erreicht ist. Es ist auch möglich und in manchen Fällen, insbesondere wenn die Hydroxylkomponente einen relativ hohen Schmelzpunkt und geringe Löslichkeit in dem Polyisocyanat aufweist, auch bevorzugt, das Ausgangspolyisocyanat bzw. Polyisocyanatgemisch vorzulegen, es auf eine Temperatur von z. B. 40-140 °C, vorzugsweise 80-120 °C aufzuheizen und die Polyhydroxylkomponente auf einmal oder vorzugsweise portionsweise zuzugeben. Dabei sollte darauf geachtet werden, daß die Innentemperatur des Reaktionsgefäßes die genannte Obergrenze von ca. 140 °C nicht übersteigt, damit Nebenreaktionen wie z. B. Trimerisierung der Isocyanatgruppen vermieden werden. Die resultierenden Urethangruppen aufweisenden Polyisocyanat-Zubereitungen stellen im allgemeinen sogenannte Semiprepolymere dar, d. h. Gemische von nicht umgesetztem Ausgangspolyisocyanat mit urethanmodifizierten NCO-Prepolymeren. Der NCO-Gehalt der Polyisocyanat-Zubereitungen liegt in Abhängigkeit von Art und Mengenverhältnis der Ausgangsmaterialien bei 5-30, insbesondere 18-28 Gew.-%.

Die Polyisocyanat-Zubereitungen weisen im allgemeinen einen im Vergleich zum entsprechenden Ausgangspolyisocyanat erniedrigten Schmelzpunkt auf. Sie werden erfindungsgemäß, gegebenenfalls im Gemisch mit anderen Polyisocyanaten der aus der Polyurethanchemie an sich bekannten Art, zur Herstellung von Formkunststoffen auf Polyurethan-Basis nach der « RIM-Technologie », d. h. nach der Reaktionspritzgußtechnik verwendet, und zwar sowohl zur Herstellung von harten, halbharten und weichen Integralformstoffen als auch zur Herstellung der entsprechenden massiven, d. h. allenfalls mikrozellulären Formkörper einer zwischen 0,8 und 1,4, vorzugsweise 0,9 bis 1,2 g/cm$^3$ liegenden Rohdichte.

Bei dieser erfindungsgemäßen Verwendung kommen die Polyisocyanat-Zubereitungen anstelle oder in Absmischung mit den hierzu üblicherweise eingesetzten Polyisocyanaten zum Einsatz. Dies bedeutet insbesondere, daß bei der erfindungsgemäßen Verwendung die Reaktionspartner und Hilfsstoffe für die Polyisocyanat-Zubereitungen und auch die sonstigen Verfahrensparameter dem Stand der Technik entsprechen, wie er sich beispielsweise aus DE-A 1 953 637, 2 121 670, 2 356 692, 2 363 452, 2 404 310, 2 427 273, 2 431 968, 2 307 589, 2 319 648, 3 012 126 oder 3 147 736, US-A 4 065 410 oder 4 218 543 bzw. EP-A 17 928, 44 481 oder 81 701 ergibt.

Die bei der erfindungsgemäßen Verwendung erhaltenen Formkunststoffe zeichnen sich durch ausgezeichnete mechanische Eigenschaften aus. Sie können grundsätzlich für die gleichen Anwendungsgebiete wie die Formkunststoffe auf Polyurethanbasis des Standes der Technik verwendet werden.

In den nachfolgenden Beispielen beziehen sich alle Prozentangaben auf Gewichtsprozente und alle Angaben in Teilen auf Gewichtsteile.

## Beispiele

Zur Herstellung der urethanmodifizierten Polyisocyanat-Zubereitungen (NCO-Semiprepolymeren) kommen die nachfolgenden Verbindungen zum Einsatz :

Polyisocyanat I : 4,4'-Diisocyanatodiphenylmethan (NCO-Gehalt : 33,6 %).

Polyisocyanat II : Gemisch aus 60 % 4,4'- und 40 % 2,4'-Diisocyanatodiphenylmethan (NCO-Gehalt : 33,5 %).

Polyisocyanat III : Gemisch aus 83 % 4,4'-Diisocyanatodiphenylmethan, 7 % 2,4'-Diisocyanatodiphenylmethan und 10 % höherfunktionellen Polyisocyanaten der Diphenylmethanreihe (NCO)-Gehalt : 31,8 %).

Polyisocyanat IV: Rohes Phosgenierungsprodukt eines Anilin/Formaldehyd-Kondensats, von dem soviel Diisocyanatodiphenylmethan-Isomere abdestilliert wurden, daß der Destillationsrückstand bei 25 °C eine Viskosität von 100 cP aufweist (NCO-Gehalt: 31 %).

Diol I: 4,4'-Bis-[(2-hydroxyethoxy)-phenyl]-propan-(2,2), hergestellt durch Ethoxylierung von Bisphenol A (Hydroxylzahl: 354).

Diol II: Propoxylierungsprodukt von Bisphenol A der OH-Zahl 320

Diol III: Propoxylierungsprodukt von Bisphenol A der OH-Zahl 200

Polyol IV: Polyetherpolyol der OH-Zahl 28, hergestellt durch Propoxylierung von Trimethylolpropan und anschließender Ethoxylierung des Propoxylierungsprodukts (Gewichtsverhältnis PO : EO = 87 : 13)

Diol V: Dipropylenglykol

Diol VI: Tripropylenglykol

Beispiel 1

(Herstellung von erfindungsgemäß zu verwendenden Polyisocyanat-Zubereitungen)

Die nachstehend angegebenen Ausgangspolyisocyanate werden mit den nachstehend angegebenen Diolen jeweils bei 25 °C vermischt, worauf die Reaktionsgemische unter Rühren während 4 Stunden auf 80 °C erhitzt werden. Auf diese Weise werden die nachstehend genannten NCO-Semiprepolymeren I bis XIX erhalten. Die angegebenen NCO-Gehalte entsprechen den analytisch gefundenen Werten.

NCO-Semiprepolymer I: aus Polyisocyanat I (5,9 Mol NCO) und Diol I (1 Mol OH) Viskosität (25 °C) = 2 600 mPa · s, NCO = 22,4 Gew.-%

NCO-Semiprepolymer II: aus Polyisocyanat II (5,03 Mol NCO) und Diol I (1 Mol OH) Viskosität (25 °C) = 41 800 mPa · s, 40 °C = 5 300 mPa · s, NCO = 20,0 Gew.-%

NCO-Semiprepolymer III: aus Polyisocyanat III (6,91 Mol NCO) und Diol II (1 Mol OH), Viskosität (25 °C) = 6 390 mPa · s, NCO = 22,5 Gew.-%

NCO-Semiprepolymer IV: aus Polyisocyanat IV (25 Mol NCO) und Diol II (1 Mol OH), Viskosität (25 °C) = 675 mPa · s, NCO = 27,9 Gew.-%

NCO-Semiprepolymer V: aus Polyisocyanat III (8,83 Mol NCO) und Diol III (1 Mol OH), Viskosität (25 °C) = 1 100 mPa · s, NCO = 22,9 Gew.-%

NCO-Semiprepolymer VI: aus Polyisocyanat II (9,26 Mol NCO) und Diol I (1 Mol OH), Viskosität (25 °C) = 65 000 mPa · s, NCO = 24,3 Gew.-%

NCO-Semiprepolymer VII: aus Polyisocyanat III (7,6 Mol NCO) aus einem Gemisch der Diole (I) (0,08 Mol OH) und (II) (0,84 Mol OH), Viskosität (25 °C) = 6 000 mPa · s, NCO = 22,6 %

NCO-Semiprepolymer VIII: aus Polyisocyanat III (7,6 Mol NCO) und einem Gemisch der Diole I (0,1 Mol OH) und II (0,9 Mol OH) Viskosität (25 °C) = 6 200 mPa · s, NCO = 22,9 %

NCO-Semiprepolymer IX: aus Polyisocyanat III (6,91 Mol NCO) und Diol II (1 Mol OH), 2-stündigem Erhitzen auf 80 °C, Zugabe von Diol III (0,49 Mol), 3-stündigem Rühren bei 80 °C und Aufstockung mit Isocyanat III (0,58 Mol NCO), Viskosität (25 °C) = 40 000 mPa · s, NCO = 19,9 %

NCO-Semiprepolymer X: aus Polyisocyanat III (6,91 Mol NCO) und einem Gemisch der Diole II (1 Mol OH) III (0,44 Mol OH) und Aufstockung mit Isocyanat III (0,55 Mol NCO) Viskosität (25 °C) = 47 000 mPa · s, NCO = 19,8 %

NCO-Semiprepolymer XI: aus Polyisocyanat III (9,31 Mol NCO) und Diol II (1 Mol OH) Viskosität (25 °C) = 830 mPa · s, NCO = 24,5 %

NCO-Semiprepolymer XII: aus Polyisocyanat I (11,99 Mol NCO) und Polyol I (1 Mol OH), Viskosität (40 °C) = 35 mPa · s, NCO = 26,8 %

NCO-Semiprepolymer XIII: aus Polyisocyanat III und Diol II (4,76 Mol NCO auf 1 Mol OH) NCO = 20,6 %, Viskosität (25 °C) = 22 100 mPa · s

NCO-Semiprepolymer XIV: aus Polyisocyanat III (5,3 Mol NCO) und Diol II (0,78 Mol OH) durch Vereinigung bei 25 °C und nachfolgendes 3-stündiges Rühren bei 80 °C, danach Zugabe von Polyol IV (0,104 Mol OH) und weiteres 3-stündiges Rühren bei 80 °C. Viskosität (28 °C) = 15 000 mPa · s, NCO = 17,95 %

NCO-Semiprepolymer XV: gleicher Ansatz wie bei Semiprepolymer XIV, jedoch werden Diol II und Polyol IV als Mischung zugegeben. Viskosität (25 °C) = 8 400 mPa · s, NCO = 18,3 %

NCO-Semiprepolymer XVI: aus Polyisocyanat III (3,78 Mol NCO) und einem Gemisch der Diole I (0,12 Mol OH) und II (0,7 Mol OH) durch Vereinigung bei 25 °C und 3-stündiges Erhitzen bei 80 °C, danach Zugabe von Polyol IV (0,094 Mol OH) und weiteres 3-stündiges Erhitzen auf 80 °C. Viskosität (25 °C) = 34 000 mPa · s, NCO = 14,5 %

NCO-Semiprepolymer XVII: aus Polyisocyanat I (20 Mol NCO) und einem Gemisch der Diole I (1,08 Mol OH) und V (1,08 Mol OH) Viskosität (25 °C = 1 200 mPa · s, NCO = 23,7 %

NCO-Semiprepolymer XVIII: aus Polyisocyanat III (20 Mol NCO) und einem Gemisch der Diole II (1,08 Mol OH) und V (1,08 Mol OH), Viskosität (25 °C) = 1 650 mPa · s, NCO = 24,2 %

NCO-Semiprepolymer XIX: aus Polyisocyanat I (3,37 Mol NCO) und einem Gemisch der Diole II (0,31 Mol OH) und VI (0,08 Mol OH), Viskosität (25 °C) = 850 mPa · s, NCO = 23 %.

Anwendungsbeispiele

Die Beispiel 2-15 werden mit Hilfe eines handelsüblichen, mit einem zwangsgesteuerten Mischkorpf ausgerüsteten Kolbendosiergeräts durchgeführt (mit einem Stößel-gereinigten Drosselschiebermischkopf MQ ausgerüstetes Kolbendosiergerät (Rimdomat(R)) der Fa. Hennecke, St. Augustin). Als Form wird eine geschlossene Aluminiumform der Innenmaße 500 × 350 × 4 mm verwendet, deren Innenwände jeweils mit einem handelsüblichen Formtrennmittel auf Wachsbasis (Acmos(R) 180 ST/5 der Firma Acmos) besprüht werden. Die Forminntemperatur liegt jeweils bei 60 °C ; die Rohstofftemperatur jeweils bei 45 °C. Die Einfüllzeit beträgt jeweils 1,5 Sekunden und die Formstandzeit jeweils 30 Sekunden.

Beispiel 2

Rezeptur :

| A | B | C | |
|---|---|---|---|
| 100 | 100 | 100 | Teile eines Polyethertriols der OH-Zahl 28, wie es durch blockweise Addition von 83 % Propylenoxid und dann 17 % Ethylenoxid an Trimethylolpropan entsteht |
| 22 | 24 | 30 | Teile eines Gemisches aus 65 Teilen 3,5-Diethyltoluylendiamin-(2,4) und 35 Teilen 3,5-Diethyltoluylendiamin-(2,6) (Amin I) |
| 0,1 | 0,1 | 0,1 | Teile Triethylendiamin |
| 0,1 | 0,1 | 0,1 | Dimethylzinn-dilaurat |
| 61,7 | 68,9 | 80,7 | Teile NCO-Semiprepolymer I : |

Es wurden folgende Eigenschaften erhalten

| | A | B | C |
|---|---|---|---|
| Raumgewicht ($kg/m^3$, DIN 53 420) | 1 083 | 1 100 | 1 094 |
| Zugfestigkeit (MPa, DIN 53 504) | 24 ± 0,8 | 25,7 ± 2 | 30,9 ± 1,6 |
| Bruchdehnung (%, DIN 53 504) | 223 ± 3 | 207 ± 15 | 202 ± 8 |
| sag-Wert (1/2 h, 160 °C) (nm) | 13,5 | 7,5 | 6,5 |
| Biege-E-Modul (MPa, ASTM-D 790) | 173 | 238 | 320 |

Beispiel 3

Rezeptur :

| A | B | |
|---|---|---|
| 100 | 100 | Teile des Polyethertriols, wie es auch in Beispiel 2 verwendet wurde |
| 40 | 55 | Teile eines Gemischs aus 50 % 3,5-Diethyl-3′,5′-diisopropyl-4,4′-diaminodiphenylmethan, 25 % 3,5,3′-5′-Tetraethyl-4,4′-diaminodiphenylmethan und 25 % 3,5,3′,5′-Tetraisopropyl-4,4′-diaminodiphenylmethan |
| 0,1 | 0,1 | Teile Triethylendiamin |
| 0,1 | 0,1 | Teile Zinnkatalysator wie Beispiel 2 |
| 58,9 | 77,6 | Teile NCO-Semiprepolymer I |

Es wurden folgende Eigenschaften erhalten (Testmethoden wie Beispiel 2) :

| | 2A | 2B |
|---|---|---|
| Raumgewicht ($kg/m^3$) | 1 102 | 1 081 |
| Zugfestigkeit (MPa) | 32,5 ± 2,5 | 33,2 ± 1,5 |
| Bruchdehnung (%) | 288 ± 15 | 245 ± 7 |
| sag-Wert (1/2 h, 160 °C) (mm) | 2 | 2,5 |
| Biege-E-Modul (MPa) | 228 | 395 |

Beispiel 4

Rezeptur :

| A | B | C | D | |
|---|---|---|---|---|
| 100 | 100 | 100 | 100 | Teile des Polyethertriols aus Beispiel 2 |
| 22 | 25 | 30 | 33,5 | Teile Amin I wie in Beispiel 2 |
| 0,1 | 0,1 | 0,1 | 0,1 | Teile Triethylendiamin |
| 0,1 | 0,1 | 0,1 | 0,1 | Teile Zinnkatalysator wie in Beispiel 2 |
| 59,9 | 67,0 | 78,1 | 85,2 | Teile NCO-Semiprepolymer III |

Es wurden folgende Eigenschaften erhalten (Testmethoden wie Beispiel 2) :

| | A | B | C | D |
|---|---|---|---|---|
| Raumgewicht (kg/m³) | 1 073 | 1 080 | 1 074 | 1 082 |
| Zugfestigkeit (MPa) | 23,5 | 26,5 | 29,5 | 30,5 |
| Bruchdehnung (%) | 224 | 223 | 201 | 184 |
| sag-Wert (1/2 h, 160 °C) (mm) | 9 | 7 | 4 | 4 |
| Biege-E-Modul (MPa) | 196 | 269 | 376 | 438 |

Beispiel 5 (Vergleich)

Beispiel 5 ist Vergleichsbeispiel zu Beispiel 4 und verwendet anstelle eines erfindungsgemäßen NCO-Semiprepolymers ein handelsübliches Produkt.

Rezeptur :

| A | B | C | D | |
|---|---|---|---|---|
| 100 | 100 | 100 | 100 | Teile Polyethertriol wie in Beispiel 2 |
| 22 | 25 | 30 | 33,5 | Teile Amin I wie in Beispiel 2 |
| 0,1 | 0,1 | 0,1 | 0,1 | Teile Triethylendiamin |
| 0,1 | 0,1 | 0,1 | 0,1 | Teile Zinnkatalysator wie in Beispiel 2 |
| 55,6 | 62,6 | 72,9 | 79,9 | Teile eines Isocyanats des NCO-Gehaltes 24,5 %, wie es durch Umsetzung von Polyisocyanat III mit Dipropylenglykol entsteht |

Es wurden folgende Eigenschaften erhalten (Testmethoden wie Beispiel 2) :

| | A | B | C | D |
|---|---|---|---|---|
| Raumgewicht (kg/m³) | 1 083 | 1 085 | 1 098 | 1 085 |
| Zugfestigkeit (MPa) | 23,5 | 25 | 28 | 29 |
| Bruchdehnung (%) | 254 | 241 | 226 | 205 |
| sag-Wert (1/2 h, 160 °C) (mm) | 10 | 7 | 4 | 5 |
| Biege-E-Modul (MPa) | 181 | 229 | 329 | 406 |

Beispiel 6

Rezeptur :

| A | B | C | D | |
|---|---|---|---|---|
| 100 | 100 | 100 | 100 | Teile eines Füllstoffpolyols der OH-Zahl 28 aus 20 Teilen eines Styrol/Acrylnitril-Copolymeren aus 60 % Acrylnitril und 40 % Styrol und 80 Teilen eines Polyethertriols der OH-Zahl 35, wie es durch Addition von 83 % Propylenoxid und 17 % Ethylenoxid an Trimethylolpropan erhalten wird. |
| 19 | 22 | 25 | 30 | Teile Amin I wie in Beispiel 2 |
| 0,1 | 0,1 | 0,1 | 0,1 | Teile Triethylendiamin |
| 0,1 | 0,1 | 0,1 | 0,1 | Teile Zinnkatalysator wie in Beispiel 2 |
| 53,6 | 59,9 | 67 | 78,1 | Teile NCO-Semiprepolymer III |

Es wurden folgende Eigenschaften erhalten (Testmethoden wie Beispiel 2) :

| | A | B | C | D |
|---|---|---|---|---|
| Raumgewicht (kg/m³) | 1 056 | 1 080 | 1 099 | 1 099 |
| Zugfestigkeit (MPa) | 25,8 | 29 | 34,1 | 35,5 |
| Bruchdehnung (%) | 184 | 169 | 184 | 140 |
| sag-Wert (1/2 h, 160 °C) (mm) | 16 | 10 | 6 | 3 |
| Biege-E-Modul (MPa) | 318 | 385 | 492 | 637 |

Beispiel 7 (Vergleich)

Beispiel 7 ist Vergleichsbeispiel zu Beispiel 6 und verwendet anstelle eines erfindungsgemäßen NCO-Prepolymers ein handelsübliches NCO-Semiprepolymer.

Rezeptur :

| A | B | C | D | |
|---|---|---|---|---|
| 100 | 100 | 100 | 100 | Teile des Füllstoffpolyols, wie es in Beispiel 6 verwendet wurde |
| 19 | 22 | 25 | 30 | Teile Amin I wie in Beispiel 2 |
| 0,1 | 0,1 | 0,1 | 0,1 | Teile Triethylendiamin |
| 0,1 | 0,1 | 0,1 | 0,1 | Teile Zinnkatalysator wie in Beispiel 2 |
| 49,5 | 55,6 | 62,0 | 72,9 | Teile eines handelsüblichen Isocyanats, wie es auch in Beispiel 5 Verwendung fand |

Es wurden folgende Eigenschaften erhalten (Testmethoden wie Beispiel 2) :

| | A | B | C | D |
|---|---|---|---|---|
| Raumgewicht (kg/m³) | 1 073 | 1 072 | 1 075 | 1 083 |
| Zugfestigkeit (MPa) | 25,7 | 27 | 27 | 30 |
| Bruchdehnung (%) | 183 | 183 | 176 | 172 |
| sag-Wert (1/2 h, 160 °C) (mm) | 15 | 10 | 7 | 3 |
| Biege-E-Modul (MPa) | 279 | 362 | 435 | 551 |

## Beispiel 8

In Beispiel 8 wird anstelle der Polyethertriole der Beispiele 2-7 ein endständige, aromatische Aminogruppen aufweisender Polyether verwendet.

Rezeptur :

| A | B | C | |
|---|---|---|---|
| 100 | 100 | 100 | Teile eines Aminopolyethers der NH-Zahl 47,0 (mg KOH/g) und einer Viskosität (25 °C) von 12 000 mPas. Dieser Aminopolyether wurde durch basische Hydrolyse der endständigen NCO-Gruppen eines NCO-Prepolymers gemäß DE-A 3 131 252 hergestellt. Das NCO-Prepolymer selbst weist einen NCO-Gehalt von 3,6 % auf und ist das gedünnschichtete Reaktionsprodukt von 2,4-Diisocyanatotoluol und einem Polyethergemisch aus 2 Teilen eines aus Trimethylolpropan/Wasser-Gemisch durch Addition vom Propylenoxid und dann Ethylenoxid hergestellten Polyethers der OH-Zahl 56, der Funktionalität 2,4 und des Molekulargewichts 2 400 und 1 Teil eines aus Glyzerin durch blockweise Addition von Propylenoxid, Ethylenoxid, Propylenoxid und wieder Ethylenoxid hergestellten Polyethers der OH-Zahl 35, der Funktionalität 3 und des Molekulargewichts 4 800. |
| 22 | 25 | 30 | Teile des Amins I aus Beispiel 2 |
| 0,1 | 0,1 | 0,1 | Teile Triethylendiamin |
| 0,1 | 0,1 | 0,1 | Teile Zinnkatalysator aus Beispiel 2 |
| 67,2 | 73,9 | 84,6 | Teile NCO-Semiprepolymer III |

Es wurden folgende Eigenschaften erhalten (Testmethoden wie Beispiel 2) :

| | A | B | C |
|---|---|---|---|
| Raumgewicht (kg/m³) | 1 104 | 1 079 | 1 076 |
| Zugfestigkeit (MPa) | 29,9 | 36,6 | 41,5 |
| Dehnung (%) | 142 | 142 | 116 |
| sag-Wert (1/2 h, 160 °C) (mm) | 12 | 8 | 3 |
| Biege-E-Modul (MPa) | 452 | 638 | 779 |

## Beispiel 9 (Vergleich)

Beispiel 9 ist das Vergleichsbeispiel zu Beispiel 8. Es wird anstelle eines erfindungsgemäßen NCO-Semiprepolymeren ein handelsübliches Produkt verwendet.

Rezeptur :

| A | B | C | |
|---|---|---|---|
| 100 | 100 | 100 | Teile des in Beispiel 8 verwendeten Aminopolyethers |
| 22 | 25 | 30 | Teile des Amins I aus Beispiel 2 |
| 0,1 | 0,1 | 0,1 | Teile Triethylendiamin |
| 0,1 | 0,1 | 0,1 | Teile Zinnkatalysator wie in Beispiel 2 |
| 62,3 | 68,2 | 78,8 | Teile eines handelsüblichen Isocyanats, wie es auch in Beispiel 5 Verwendung fand |

Es wurden folgende Eigenschaften erhalten (Testmethoden wie Beispiel 2) :

| | A | B | C |
|---|---|---|---|
| Raumgewicht (kg/m³) | 1 062 | 1 061 | 1 079 |
| Zugfestigkeit (MPa) | 31 | 31 | 33 |
| Dehnung (%) | 182 | 176 | 158 |
| sag-Wert (1/2 h, 160 °C) (mm) | 14 | 9 | 4 |
| Biege-E-Modul (MPa) | 417 | 480 | 651 |

## Beispiele 10 und 11

Rezepturen :

| 10A | 10B | 11A | 11B | |
|---|---|---|---|---|
| 100 | 100 | — | — | Teile des in Beispiel 2 verwendeten Polyethertriols |
| — | — | 100 | 100 | Teile eines Polyethertriols, wie es durch blockweise Addition von 80 % Propylenoxid und 20 % Ethylenoxid an Propandiol-1,2 entsteht, mit einer OH-Zahl 28 |
| 40 | 55 | — | — | Amin, wie es in Beispiel 3 verwendet wurde |
| — | — | 22 | 30 | Amin I, wie es in Beispiel 2 verwendet wurde |
| 0,1 | 0,1 | 0,1 | 0,1 | Triethylendiamin |
| 0,1 | 0,1 | 0,1 | 0,1 | Zinnkatalysator wie in Beispiel 2 |
| 57,5 | 76,0 | 61,1 | 78,8 | NCO-Semiprepolymer III |

Es wurden folgende Eigenschaften erhalten (Testmethoden wie Beispiel 2) :

| | 10A | 10B | 11A | 11B |
|---|---|---|---|---|
| Raumgewicht (kg/m³) | 1 078 | 1 068 | 1 091 | 1 084 |
| Zugfestigkeit (MPa) | 26,4 ± 0,8 | 31,4 ± 2,5 | 29,5 ± 1,5 | 28,1 ± 3,5 |
| Bruchdehnung (%) | 253 ± 3 | 220 ± 3 | 307 ± 13 | 219 ± 27 |
| sag-Wert (1/2 h, 160 °C) (mm) | 6 | 2 | 9 | 3,5 |
| Biege-E-Modul (MPa) | 265 | 411 | 263 | 424 |

## Beispiel 12

Rezeptur :

| A | B | C | |
|---|---|---|---|
| 100 | 100 | 100 | Teile des Polyethertriols aus Beispiel 2 |
| 22 | 25 | 30 | Teile Amin I aus Beispiel 2 |
| 0,1 | 0,1 | 0,1 | Teile Triethylendiamin |
| 0,1 | 0,1 | 0,1 | Teile Zinnkatalysator aus Beispiel 2 |
| 59,9 | 67,0 | 78,1 | Teile NCO-Semiprepolymer V |

Es wurden folgende mechanische Werte erhalten (Testmethoden wie Beispiel 2) :

| | A | B | C |
|---|---|---|---|
| Raumgewicht (kg/m³) | 1 089 | 1 068 | 1 100 |
| Zugfestigkeit (MPa) | 18,3 ± 0,9 | 26,1 ± 1 | 28,4 ± 1,4 |
| Bruchdehnung (%) | 109 ± 4 | 230 ± 7 | 226 ± 9 |
| sag-Wert (160 °C, 1/2 h) (mm) | 10,5 | 11 | 7 |
| Biege-E-Modul (MPa) | 152 | 229 | 297 |

## Beispiel 13

Rezeptur :

| A | B | C | |
|---|---|---|---|
| 100 | 100 | 100 | Teile des Polyethertriols aus Beispiel 2 |
| 22 | 25 | 30 | Teile Amin I aus Beispiel 2 |
| 0,1 | 0,1 | 0,1 | Teile Triethylendiamin |
| 0,1 | 0,1 | 0,1 | Teile Zinnkatalysator wie in Beispiel 2 |
| 56 | 65 | 74 | NCO-Semiprepolymer II |

Es wurden folgende eigenschaften erhalten (Testmethoden wie Beispiel 2) :

| | A | B | C |
|---|---|---|---|
| Raumgewicht (kg/m³) | 1 050 | 1 070 | 1 050 |
| Zugfestigkeit (MPa) | 21 | 23 | 27 |
| Dehnung (%) | 310 | 300 | 260 |
| sag-Wert (1/2 h, 160 °C) (mm) | 17 | 8 | 7 |
| Biege-E-Modul (MPa) | 150 | 210 | 290 |

Beispiel 14

Rezeptur :

| A | B | C | |
|---|---|---|---|
| 100 | 100 | 100 | Teile des Polyethertriols aus Beispiel 2 |
| 22 | 25 | 30 | Teile Amin I aus Beispiel 2 |
| 0,1 | 0,1 | 0,1 | Teile Triethylendiamin |
| 0,1 | 0,1 | 0,1 | Teile Zinnkatalysator wie in Beispiel 2 |
| 41 | 44 | 50 | Teile NCO-Semiprepolymer IV |

Es wurden folgende Eigenschaften erhalten (Testmethoden wie Beispiel 2) :

| | A | B | C |
|---|---|---|---|
| Raumgewicht (kg/m³) | 1 100 | 1 090 | 1 090 |
| Zugfestigkeit (MPa) | 24 | 26 | 68 |
| Bruchdehnung (%) | 170 | 165 | 155 |
| sag-Wert (1/2 h, 160 °C) (mm) | 6 | 5 | 2 |
| Biege-E-Modul (MPa) | 180 | 240 | 280 |

Beispiel 15

Rezeptur :

| A | B | C | |
|---|---|---|---|
| 100 | 100 | 100 | Teile des Polyethertriols aus Beispiel 2 |
| 25 | 25 | 30 | Teile Amin I aus Beispiel 2 |
| 0,1 | 0,1 | 0,1 | Teile Triethylendiamin |
| 0,1 | 0,1 | 0,1 | Teile Zinnkatalysator wie in Beispiel 2 |
| 56 | 65 | 74 | Teile NCO-Semiprepolymer VI |

Es wurden folgende Eigenschaften erhalten (Testmethoden wie Beispiel 2) :

| | A | B | C |
|---|---|---|---|
| Raumgewicht (kg/m³) | 1 060 | 1 050 | 1 050 |
| Zugfestigkeit (MPa) | 23 | 25 | 29 |
| Bruchdehnung (%) | 290 | 280 | 240 |
| sag-Wert (1/2 h, 160 °C) (mm) | 14 | 12 | 6 |
| Biege-E-Modul (MPa) | 170 | 220 | 210 |

Beispiel 16

Im Unterschied zu den Beispielen 2-15 wurde Beispiel 16 auf einem 2 1-Rimdomat, einer Hochdruckanlage der Firma Hennecke, St. Augustin, mit einem Mischkopf der Firma Krauss-Maffei, München, gefahren.

Arbeitsdruck : 180 bar auf beiden Komponenten
Rohstofftemperatur : 40 °C
Formentemperatur
(Stahlform der inneren Abmessung 200 × 200 × 4 mm,
Innenwände mit handelsüblichem Formtrennmittel gemäß Beispielen 2-15 besprüht) : 60 °C
Einfüllzeit : 1,5 sec
Formstandzeit : 60 sec

Rezeptur :

| A | B | C | |
|---|---|---|---|
| 77 | 77 | 77 | Teile Polyethertriol wie aus Beispiel 2 |
| 23 | 23 | 23 | Teile Amin I aus Beispiel 2 |

(Fortsetzung)

| A | B | C | |
|---|---|---|---|
| 0,2 | 0,2 | 0,2 | Teile Zinnkatalysator wie in Beispiel 2 |
| 0,6 | 0,6 | 0,6 | Teile einer 33 %igen Lösung von Triethylendiamin in Dipropylenglykol |
| 58,8 | — | — | Teile Semiprepolymer III (Kennzahl 105) |
| — | 67,2 | — | Teile Semiprepolymer XIII (Kennzahl 105) |
| — | — | 55 | Teile des handelsüblichen Isocyanats aus Beispiel 5 |

Es wurden folgende mechanische Eigenschaften erhalten :

| | A | B | C |
|---|---|---|---|
| Raumgewicht (kg/m³, DIN 53 420) | 1 093 | 1 102 | 1 100 |
| Zugfestigkeit RT (MPa, DIN 53 504) | 29 | 32,9 | 26 |
| Bruchdehnung (%, DIN 53 504) | 269 | 224 | 250 |
| Weiterreißfestigkeit (kN/m, DIN 53 515) | 106 | 59,8 | 65 |
| Shore D-Härte (DIN 53 505) | 59 | 68 | 58 |
| Zugspannung 50 % (MPa, DIN 53 504) | 14,1 | 18,4 | 14,2 |
| Biegemodul RT (MPa, ASTM D-790) | 414 | 585 | 350 |

## Beispiel 17 — Halbharter Integralschaum der Dichte 700

Rezeptur :

| A | B | C | |
|---|---|---|---|
| 95 | 95 | 95 | Teile eines Polyethertriols der OH-Zahl 27, entstanden durch blockweise Addition von 78 % Propylenoxid und dann 22 % Ethylenoxid an Trimethylolpropan |
| 23,5 | 23,5 | 23,5 | Teile Ethylenglykol |
| 15 | 15 | 15 | Teile Dichlormethan |
| 0,1 | 0,1 | 0,1 | Teile Triethylendiamin |
| 0,15 | 0,15 | 0,15 | Teile Zinnkatalysator wie in Beispiel 2 |
| 278 | | | Teile des handelsüblichen Isocyanats, wie es in Beispiel 5 verwendet wurde |
| | 292 | | Teile des handelsüblichen Isocyanats des NCO-Gehaltes 23 %, wie es durch Reaktion von 4,4′-Diisocyanatodiphenylmethan mit Tripropylenglykol erhalten wird |
| | | 276 | Teile NCO-Semiprepolymer III |

Die Komponenten werden intensiv vermischt und das Reaktionsgemisch in eine 50 °C warme, geschlossene Stahlform der Innenmaße 20 × 20 × 1 cm, deren Innenwände mit dem handelsüblichen Trennmittel gemäß Beispielen 2-15 besprüht worden sind, eingetragen.

Es wurden folgende Eigenschaften erhalten (Testmethoden wie Beispiel 16) :

| | A | B | C |
|---|---|---|---|
| Raumgewicht (kg/m³) | 694 | 710 | 698 |
| Shore D-Härte | 60 | 53 | 65 |
| Biege-E-Modul (MPa) + 120 °C | 15 | 21 | 12 |
| RT | 281 | 252 | 357 |
| Zugfestigkeit | 9,1 | 7,6 | 9,1 |
| Bruchdehnung (%) | 71,3 | 71,0 | 59 |
| sag-Test (160 °C/30 min) (mm) | 12,8 | 12,7 | 9,3 |

Beispiele 17 A und 17 B sind Vergleichsbeispiele.

## Beispiel 18

Rezeptur :

95 Teile des Polyethertriols aus Beispiel 15
23,5 Teile Ethylenglykol
10 Teile Dichlormethan
0,1 Teile Triethylendiamin
0,12 Teile des Zinnkatalysators aus Beispiel 1

werden intensiv bei Raumtemperatur vermischt und dann mit

A : 253 Teilen des handelsüblichen Isocyanats aus Beispiel 5 (zum Vergleich)
B : 279 Teilen NCO-Semiprepolymer III

C : 279 Teilen NCO-Semiprepolymer VII
D : 279 Teilen NCO-Semiprepolymer VIII
E : 279 Teilen NCO-Semiprepolymer IX
F : 279 Teilen NCO-Semiprepolymer X
G : 270 Teilen NCO-Semiprepolymer XI (0,2 Teile Triethylendiamin, 0,18 Teile Sn-Katalysator aus Beispiel 2)
H : 250 Teilen NCO-Semiprepolymer XII,

vermischt und dieses Reaktionsgemisch dann in eine 60 °C warme Stahlform gemäß Beispiel 17 eingetragen und darin ausgsehärtet. Die Formstandzeit beträgt 2 Min.

Versuch 18 A ist Vergleichsversuch.

Es wurden folgende mechanischen Eigenschaften erhalten *)

| | A | B | C | D | E | F | G | H |
|---|---|---|---|---|---|---|---|---|
| Raumgewicht | 1 005 | 1 002 | 998 | 1 012 | 1 000 | 1 013 | 1 005 | 1 007 |
| Shore-D-Härte | 66 | 71 | 69 | 70 | 71 | 73 | 69 | 70 |
| Biege-E-Modul (MPa) RT | 361 | 594 | 579 | 564 | 559 | 727 | 396 | 494 |
| 120 °C | 13 | 16 | 17 | 13 | 11 | 8 | 17 | 16 |
| E-Modul (MPa) aus Zugversuch | 275 | 464 | 448 | 446 | 470 | 598 | 353 | 360 |
| Bruchdehnung (%) | 36 | 57 | 7,7 | 26 | 68 | 64 | 19,3 | 10 |
| Zugfestigkeit (MPa) | 12,6 | 17,4 | 12,9 | 16,4 | 14,9 | 18,0 | 13,9 | 14,1 |
| sag-Wert (160 °C/30 min) (mm) | 10,4 | 10,7 | 7,3 | 10,4 | 14,6 | 8,3 | 8,1 | 5,2 |

*) E-Modul gemäß DIN 53504, sag-Wert gemäß Testvorschrift der Firma General Motors, im übrigen Testmethoden wie in Beispiel 16

## Beispiel 19

Rezeptur :

| A | B | |
|---|---|---|
| 100 | 100 | Teile eines Polyolgemisches der OH-Zahl 56 und einer Viskosität (25 °C) von 850 mPas, hergestellt durch Vermischung von<br>a) 100 Teilen eines Polyethers der OH-Zahl 35, hergestellt durch Addition von 82,5 % Propylenoxid und 17,5 % Ethylenoxid an Trimethylolpropan, mit<br>b) 10 Teilen eines Polyethers der OH-Zahl 150, hergestellt durch Addition von 87 % Propylenoxid und 13 % Ethylenoxid an Propylenglykol |
| 1,4 | 1,4 | Teilen einer Lösung aus 20 Gew.-% Kaliumacetat und 80 Gew.-% Dipropylenglykol |
| 200 | — | Teilen des handelsüblichen Isocyanates aus Beispiel 5 |
| | 200 | Teilen NCO-Semiprepolymer XII |

Aus der intensiv vermischten Mischung wurden in einer Stahlform gemäß Beispiel 17 (T = 70 °C) massive, 10 mm starke Teile (200 × 200 × 1 mm) gegossen und ausgehärtet (Standzeit : 1 min), NCO-Index = 1213 (A) bzw. 1280 (B).

Versuch 19 A ist Vergleichsversuch.

Es wurden folgende Eigenschaften ermittelt (Testmethoden wie Beispiel 16) :

| | | A | B |
|---|---|---|---|
| Dichte | | 1 158 | 1 213 |
| Wärmebiegefestigkeit (°C) | | 191 | 238 |
| Biegespannung 0,31 Mpa, Aufheizrate 50 °C/h, Durchbiegung (10 mm) | | | |
| Schubmodul (Mpa) | 20 °C | 503 | 568 |
| (DIN 53 445) | 100 °C | 288 | 329 |
| | 180 °C | 153 | 207 |
| Schubmodul 180 °C/20 °C | | 0,30 | 0,36 |
| linearer Ausdehnungskoeffizient | | $1{,}35 . 10^{-6}$ | $0{,}85 . 10^{-6}$ |

Wie die Tabelle ausweist, besitzen die nach 19 B hergestellten Teile eine höhere Wärmebiegefestigkeit und höhere Schubmodulwerte als die mit einem handelsüblichen Isocyanat hergestellten Teile. Besonders bemerkenswert ist die Verbesserung des linearen Ausdehnungskoeffizienten bei den erfindungsgemäß hergestellten Teilen gegenüber den Vergleichsproben. Dies ist von großer Bedeutung für die Herstellung z. B. von Metall enthaltenden Verbundwerkstoffen, bei denen der lineare Ausdehnungskoeffizient des Kunststoffs möglichst $< 10^{-6}$ liegen soll.

**Patentansprüche**

1. Verwendung von urethanmodifizierten Polyisocyanat-Zubereitungen mit einem NCO-Gehalt von 5-30 Gew.-%, hergestellt durch Umsetzung von

a) organischen Polyisocyanaten, bestehend aus

a1) 4,4'-Diisocyanatodiphenylmethan oder dessen Gemischen mit 2,4'-Diisocyanatodiphenylmethan und gegebenenfalls 2,2'-Diisocyanatodiphenylmethan,

a2) rohen Phosgenierungsprodukten von Anilin/Formaldehyd-Kondensaten, die neben den unter a1) genannten Diisocyanaten deren höhere Homologen enthalten, oder

a3) Gemischen der unter a1) und a2) genannten Polyisocyanate

mit

b) 2 alkoholische Hydroxylgruppen aufweisenden Alkoxylierungsprodukten des OH-Zahlbereichs 112 bis 389 von Bisphenolen der Formel

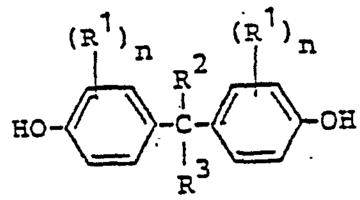

gegebenenfalls in Abmischung mit bis zu 90 Hydroxyläquivalentprozent an anderen organischen Polyhydroxylverbindungen, wobei

$R^1$ für einen Alkylrest mit 1 bis 4 Kohlenstoffatomen, Chlor oder Brom steht,

$R^2$ und $R^3$ für gleiche oder verschiedene Reste stehen und Wasserstoff oder Alkylreste mit 1 bis 6 Kohlenstoffatomen bedeuten oder zusammen mit dem, die beiden aromatischen Ringe verknüpfenden Kohlenstoffatom einen 5 bis 7 gliedrigen cycloaliphatischen Kohlenwasserstoffrest bilden, und

n für 0 oder eine ganze Zahl von 1 bis 4 steht,

unter Einhaltung eines NCO/OH-Äquivalentverhältnisses von 4 : 1 bis 20 : 1 als Isocyanatkomponente bei der Herstellung von Formkunststoffen auf Polyurethanbasis nach der Reaktionsspritzgußtechnik.

2. Verwendung gemäß Anspruch 1, dadurch gekennzeichnet, daß man als Komponente b) Alkoxylierungsprodukte von Bisphenol A, die unter Verwendung von Ethylenoxid und/oder Propylenoxid als Alkoxylierungsmittel erhalten worden sind, verwendet.

3. Verwendung gemäß Anspruch 1 und 2, dadurch gekennzeichnet, daß man als Komponente b) Ethoxylierungs- oder Propoxylierungsprodukte von Bisphenol A des Hydroxylzahlbereichs 200 bis 354 verwendet.

4. Verwendung gemäß Anspruch 1 bis 3, dadurch gekennzeichnet, daß man als Komponente b) das Dipropoxylierungsprodukt von Bisphenol A verwendet.

**Claims**

1. Use of urethane-modified polyisocyanate preparations having an NCO content of 5-30 % by weight, produced by reacting

a) organic polyisocyanates consisting of

a1) 4,4'-diisocyanatodiphenylmethane or mixtures thereof with 2,4'-diisocyanatodiphenylmethane and, optionally, 2,2'-diisocyanatodiphenylmethane,

a2) crude phosgenation products of aniline/formaldehyde condensates which contain, in addition to the diisocyanates mentioned under a1), higher homologues thereof, or

a3) mixtures of the polyisocyanates mentioned under a1) and a2)

with

b) alkoxylation products, which have 2 alcoholic hydroxyl groups and an OH number in the range 112 to 389, of bisphenols of the formula

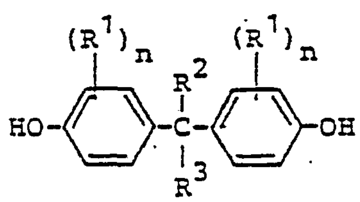

optionally mixed with up to 90 hydroxyl equivalent per cent of other organic polyhydroxyl compounds, wherein

$R^1$ represents an alkyl radical with 1 to 4 carbon atoms, chlorine or bromine,

$R^2$ and $R^3$ represent identical or different radicals and denote hydrogen or alkyl radicals with 1 to 6 carbon atoms or, together with the carbon atom linking the two aromatic rings, form a 5 to 7-membered cycloaliphatic hydrocarbon radical and

n represents 0 or an integer from 1 to 4,

while adhering to an NCO/OH equivalent ratio of 4 : 1 to 20 : 1 as the isocyanate component in the production of moulded plastics based on polyurethanes by the reaction injection moulding technique.

2. Use according to Claim 1, characterised in that alkoxylation products of bisphenol A, which have been obtained using, ethylene oxide and/or propylene oxide as the alkoxylating agent, are used as component b).

3. Use according to Claim 1 and 2, characterised in that ethoxylation or propoxylation products of bisphenol A having a hydroxyl number in the range 200 to 354 are used as component b).

4. Use according to Claim 1 to 3, characterised in that the dipropoxylation product of bisphenol A is used as component b).

**Revendications**

1. Utilisation de compositions de polyisocyanates à modification uréthanne et à une teneur en NCO de 5 à 30 % en poids, préparées par réaction de :

a) des polyisocyanates organiques consistant en

a1) du 4,4'-diisocyanatodiphénylméthane ou ses mélanges avec du 2,4'-diisocyanatodiphénylméthane et le cas échéant du 2,2'-diisocyanatodiphénylméthane,

a2) des produits de phosgénation bruts de condensats aniline/formaldéhyde contenant, en plus des diisocyanates mentionnés sous a1), leurs homologues supérieurs, ou bien

a3) des mélanges des polyisocyanates mentionnés sous a1) et a2)

avec

b) des produits d'alcoxylation, portant 2 groupes hydroxy alcooliques, ayant un indice d'OH de 112 à 389, de bisphénols de formule :

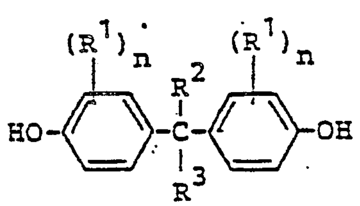

éventuellement en mélange avec jusqu'à 90 équivalents pourcent d'autres composés polyhydroxylés organiques,

$R^1$ représentant un groupe alkyle en $C_1$-$C_4$, le chlore ou le brome,

$R^2$ et $R^3$, ayant des significations identiques ou différentes, représentant chacun l'hydrogène ou un groupe alkyle en $C_1$-$C_6$ ou bien ensemble, avec l'atome de carbone reliant les deux noyaux aromatiques, un reste hydrocarboné cycloaliphatique de 5 à 7 chaînons, et

n est égal à 0 ou à un nombre entier de 1 à 4,

avec maintien d'un rapport de 4 : 1 à 20 : 1 entre les équivalents de groupes NCO/OH, en tant que composants isocyanates à la préparation de résines synthétiques moulées à base de polyuréthannes par la technique de moulage réactif par injection.

2. Utilisation selon la revendication 1, caractérisée en ce qu'on utilise en tant que composant b) des produits d'alcoxylation du bisphénol A obtenus en utilisant en tant qu'agents alcoxylants de l'oxyde d'éthylène et/ou de l'oxyde de propylène.

3. Utilisation selon les revendications 1 et 2, caractérisée en ce que l'on utilise en tant que composant b) des produits d'éthoxylation ou de propoxylation du bisphénol A, d'indice d'hydroxyle situé dans l'intervalle de 200 à 354.

4. Utilisation selon les revendications 1 à 3, caractérisée en ce qu'on utilise en tant que composant b) le produit de dipropoxylation du bisphénol A.